(19) **Europäisches Patentamt European Patent Office Office européen des brevets**

(11) **EP 4 671 069 A1**

(12) **EUROPEAN PATENT APPLICATION**
published in accordance with Art. 153(4) EPC

(43) Date of publication:
31.12.2025  Bulletin 2026/01

(21) Application number: 23924954.3

(22) Date of filing: 24.10.2023

(51) International Patent Classification (IPC):
B60W 30/165 (2020.01)    B60W 30/16 (2020.01)
B60W 30/14 (2006.01)    G05D 1/43 (2024.01)

(52) Cooperative Patent Classification (CPC):
B60W 30/14; B60W 30/16; B60W 30/165;
G05D 1/242; G05D 1/243; G05D 1/246; G05D 1/43;
G05D 1/633; G05D 1/644; G05D 1/648; G05D 1/65;
G05D 1/692; G05D 2105/05

(86) International application number:
PCT/CN2023/126298

(87) International publication number:
WO 2024/179000 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.02.2023  CN 202310224107

(71) Applicant: Shenzhen Yinwang Intelligent
Technologies Co., Ltd.
Shenzhen, Guangdong 518110 (CN)

(72) Inventors:
• JIANG, Xu
Shenzhen, Guangdong 518129 (CN)

• HU, Yuying
Shenzhen, Guangdong 518129 (CN)
• DONG, Guoshun
Shenzhen, Guangdong 518129 (CN)
• LUO, Jie
Shenzhen, Guangdong 518129 (CN)
• HE, Lang
Shenzhen, Guangdong 518129 (CN)

(74) Representative: Maiwald GmbH
Engineering
Elisenhof
Elisenstrasse 3
80335 München (DE)

(54) **VEHICLE CONTROL METHOD AND RELATED APPARATUS**

(57)     A vehicle control method and a related apparatus are provided. The vehicle control method includes: obtaining first information and a location of a leading vehicle of a vehicle, where the first information includes a speed of the leading vehicle and/or an expected track of an intelligent vehicle queue (S301); and determining a target traveling location of the vehicle based on the first information and the location of the leading vehicle (S302). The control method further includes: The vehicle may obtain a heading angle of the leading vehicle (S501), determine a target heading angle of the vehicle based on the heading angle of the leading vehicle (S502), and control a vehicle traveling direction based on the target heading angle (S503). The control method can be applied to both a queue forming phase and a queue maintenance phase of the intelligent vehicle queue. This helps improve traveling efficiency of the intelligent vehicle queue.

Obtain first information and a location of a leading vehicle of a vehicle, where the first information includes a speed of the leading vehicle and/or an expected track of an intelligent vehicle queue — S301

Determine a target traveling location of the vehicle based on the first information and the location of the leading vehicle — S302

Control a traveling track of the vehicle based on the target traveling location of the vehicle — S303

FIG. 3

## Description

This application claims priority to Chinese Patent Application No. 202310224107.3, filed with the China National Intellectual Property Administration on February 28, 2023 and entitled "VEHICLE CONTROL METHOD AND RELATED APPARATUS", which is incorporated herein by reference in its entirety.

## TECHNICAL FIELD

This application relates to the internet of vehicles field, and in particular, to a vehicle control method and a related apparatus.

## BACKGROUND

An intelligent vehicle queue can improve vehicle working efficiency and reduce vehicle running costs and energy consumption, and is a future development direction of the transportation field. Therefore, the intelligent vehicle queue is proposed in the intelligent vehicle field.

The intelligent vehicle queue includes a plurality of vehicles that travel in order. Any two adjacent vehicles may be referred to as one queue unit in the intelligent vehicle queue. In one queue unit, a vehicle that travels in front is referred to as a leading vehicle, and a vehicle that travels behind is referred to as a following vehicle. When an intelligent vehicle queue is implemented, a traveling status of a following vehicle needs to be consistent with a traveling status of a leading vehicle as much as possible, and the intelligent vehicle queue cannot deviate from an expected track, in other words, stability of the intelligent vehicle queue needs to be maintained.

Therefore, how to maintain the stability of the intelligent vehicle queue is an urgent technical problem to be resolved.

## SUMMARY

This application provides a vehicle control method and a related apparatus, to maintain stability of an intelligent vehicle queue.

According to a first aspect, this application provides a vehicle control method. A vehicle is a vehicle in an intelligent vehicle queue. The method includes: obtaining first information and a location of a leading vehicle of the vehicle, where the first information includes a speed of the leading vehicle and/or an expected track of the intelligent vehicle queue; determining a target traveling location of the vehicle based on the first information and the location of the leading vehicle; and controlling a traveling track of the vehicle based on the target traveling location.

Any two adjacent vehicles in the intelligent vehicle queue may form one queue unit. In each queue unit, a vehicle that travels in front is referred to as a leading vehicle, and a vehicle that travels behind is referred to as a following vehicle.

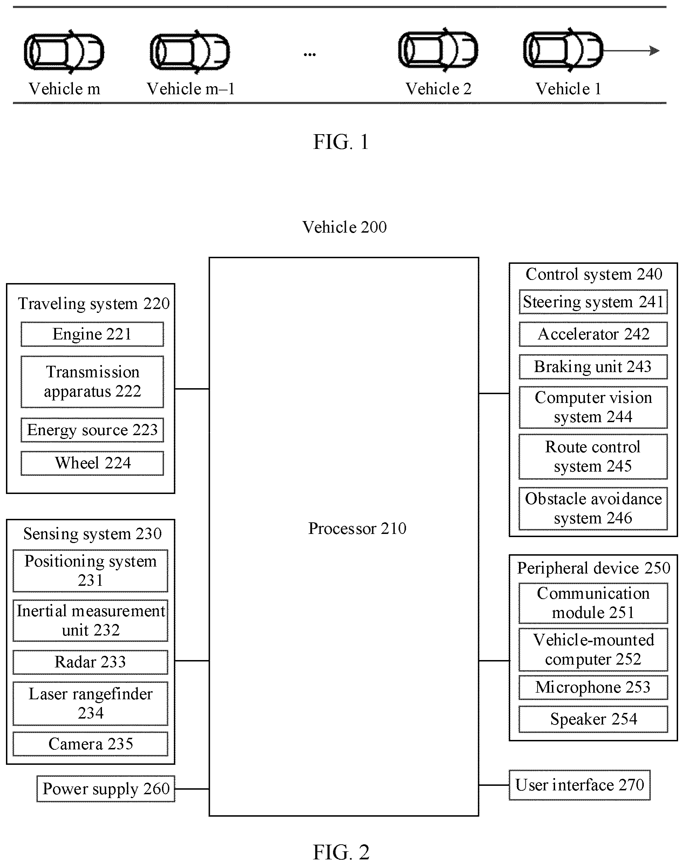

In the method, the vehicle may be any following vehicle in the intelligent vehicle queue, and the leading vehicle of the vehicle is in one-to-one correspondence with the vehicle. For example, the vehicle may be a vehicle 2 in the embodiment shown in FIG. 1, and correspondingly the leading vehicle is a vehicle 1. For another example, the vehicle may alternatively be a vehicle 3 in the embodiment shown in FIG. 1, and correspondingly the leading vehicle is a vehicle 2.

The expected track of the intelligent vehicle queue may be determined based on a road on which the intelligent vehicle queue is located. In some embodiments, the expected track of the intelligent vehicle queue may be a center line of the road on which the intelligent vehicle queue is located.

In the method, a distance between the target traveling location of the vehicle and the leading vehicle on the expected track may be determined based on the speed of the leading vehicle and the location of the leading vehicle. The distance between the target traveling location of the vehicle and the leading vehicle on the expected track may be equivalent to an actual distance between the target traveling location of the vehicle and the leading vehicle on the road.

A distance of the leading vehicle in a vertical direction of the expected track may be determined based on the expected track and the location of the leading vehicle. Further, a distance of the target traveling location of the vehicle in the vertical direction of the expected track may be determined based on the distance of the leading vehicle in the vertical direction of the expected track.

In the method, a distance between the target traveling location of the vehicle and the leading vehicle on the expected track may be dynamically adjusted based on the speed of the leading vehicle. The distance of the target traveling location of the vehicle in the vertical direction of the expected track may be close to the distance of the leading vehicle in the vertical direction of the expected track, so that the traveling track of the vehicle may be close to a traveling track of a front vehicle. This facilitates track stability of the intelligent vehicle queue.

In addition, a method for determining the target traveling location of the vehicle may be applied to both a queue forming phase and a queue maintenance phase. To be specific, the vehicle may determine the target traveling location of the vehicle by using the method in any phase or at any moment. This simplifies a process of calculating a target location of the vehicle, and helps improve traveling efficiency of the vehicle.

In some possible implementations, when the first information includes the speed of the leading vehicle, the determining a target traveling location of the vehicle based on the first information and the location of the leading vehicle includes: determining a first longitudinal distance based on the speed of the leading vehicle, a speed of the vehicle, and a safe traveling distance, where the first longitudinal distance indicates an interval arc length between the target traveling location of the vehicle and the location of the leading vehicle on the expected track, the first longitudinal distance separately meets a positive correlation relationship with the speed of the leading vehicle, the speed of the vehicle, and a relative speed, the first longitudinal distance is greater than or equal to the safe traveling distance, and the relative speed is a relative speed between the leading vehicle and the vehicle; and determining the target traveling location based on the first longitudinal distance and the location of the leading vehicle.

In the method, a higher speed of the leading vehicle indicates a larger first longitudinal distance. The first longitudinal distance may be dynamically adjusted based on the speed of the leading vehicle, so that the first longitudinal distance conforms to an actual running status of the vehicle.

In the method, a higher speed of the vehicle indicates a larger first longitudinal distance, to avoid a case in which a distance between the vehicle and the leading vehicle becomes smaller when the speed of the vehicle is greater than that of the leading vehicle, and even a case in which rear-end collision may occur.

The first longitudinal distance is greater than or equal to the safe traveling distance, so that the distance between the vehicle and the leading vehicle may be greater than or equal to the safe traveling distance, to ensure safe traveling of the queue.

In some possible implementations, when the first information includes the expected track, the determining a target traveling location of the vehicle based on the first information and the location of the leading vehicle includes: determining a lateral distance based on the location of the leading vehicle and the expected track, where the lateral distance indicates a deviation distance between the target traveling location of the vehicle and the location of the leading vehicle in a vertical direction of the expected track, and the lateral distance is less than or equal to a second distance threshold when a distance between the location of the leading vehicle and the expected track in the vertical direction is less than or equal to a first distance threshold, or the lateral distance enables a distance between the target traveling location and the expected track in the vertical direction to be less than or equal to a third distance threshold when the distance between the location of the leading vehicle and the expected track in the vertical direction is greater than the first distance threshold; and determining the target traveling location based on the lateral distance and the location of the leading vehicle.

A distance between the vehicle and the expected track in the vertical direction may also be referred to as a vertical distance between the vehicle and the expected track.

The first distance threshold may indicate a maximum vertical distance between the vehicle in the intelligent vehicle queue and the expected track. For example, the first distance threshold may be 1 m.

The second distance threshold may indicate a maximum threshold of a lateral distance, and the second distance threshold is a small value. For example, the second distance threshold may be 0.1 m.

The third distance threshold may indicate a maximum vertical distance between the target location of the vehicle and the expected track. Optionally, the third distance threshold may be equal to or slightly less than the first distance threshold. For example, the third distance threshold may be 0.9 m.

When the vertical distance between the leading vehicle and the expected track is less than or equal to 1 m, because the vertical distance between the leading vehicle and the expected track does not exceed the maximum vertical distance, that is, the leading vehicle does not deviate from the expected track, the lateral distance may be set to be less than 0.1 m, so that the vertical distance between the vehicle and the expected track is close to the vertical distance between the leading vehicle and the expected track. This helps the vehicle approach a traveling track of the leading vehicle.

When the vertical distance between the leading vehicle and the expected track is greater than 1 m, the vertical distance between the leading vehicle and the expected track exceeds the maximum vertical distance, that is, the leading vehicle deviates from the expected track. In this case, the lateral distance may be set to a large value, and the vertical distance between the vehicle and the expected track is less than 0.9 m. In this way, when the leading vehicle deviates from the expected track, the vehicle may adjust a vertical distance between a target traveling distance and the expected track, so that the target location of the vehicle does not deviate from the expected track. This facilitates stable traveling of the intelligent vehicle queue.

In some possible implementations, the method further includes: obtaining a heading angle of the leading vehicle; and determining a target heading angle of the vehicle based on the heading angle of the leading vehicle, where when an expected track between a current location of the vehicle and the location of the leading vehicle is a straight line, a difference between the target heading angle of the vehicle and the heading angle of the leading vehicle is less than or equal to a heading angle threshold; or when the expected track between the current location of the vehicle and the location of the leading vehicle is a curve, the target heading angle of the vehicle is located between the heading angle of the leading vehicle and a heading angle of the expected track between the current location of the vehicle and the location of the leading vehicle.

The heading angle threshold is a small threshold. For example, the heading angle threshold may be 2 degrees (°).

When the expected track between the current location of the vehicle and the location of the leading vehicle is a straight line, assuming that the heading angle of the leading vehicle is 20°, the target heading angle of the vehicle may be between 18° and 22°. In this way, when the vehicle platoon travels in a straight line, the target heading angle of the vehicle may be basically consistent with the heading angle of the leading vehicle, to ensure that traveling directions of the vehicle and the leading vehicle are stable. This facilitates stability of the traveling direction of the queue.

When the expected track between the current location of the vehicle and the location of the leading vehicle is a curve, assuming that the heading angle of the leading vehicle is 10°, and the heading angle of the expected track is -10°, the target heading angle of the vehicle may be between -10° and 10°. In this way, when the vehicle platoon travels in a curve, the target heading angle of the vehicle may tend to a tangential direction of the expected track, that is, may tend to a tangential direction of the center line of the road on which the vehicle is located, to prevent the vehicle from deviating from the road. This facilitates stable traveling of the queue.

In addition, a method for determining the target heading angle of the vehicle may be applied to both a queue forming phase and a queue maintenance phase. To be specific, the vehicle may determine the target heading angle of the vehicle by using the method in any phase or at any moment. This simplifies a process of calculating the target heading angle of the vehicle, and helps improve traveling efficiency of the vehicle.

In some possible implementations, the method further includes: obtaining a curvature of a road on which the intelligent vehicle queue is located; and determining a target speed of the vehicle based on the curvature of the road, where the target speed of the vehicle is inversely proportional to the curvature.

In the method, the vehicle may obtain, in real time through V2X, the curvature of the road on which the vehicle is located.

In the method, the target speed of the vehicle is inversely proportional to the curvature, so that a case in which the vehicle turns over when traveling on a curve can be avoided, thereby facilitating stable traveling of the vehicle platoon.

In addition, the method may be applied to both the queue forming phase and the queue maintenance phase, that is, the target speed of the vehicle is always inversely proportional to the curvature of the road, so that the vehicle platoon can stably travel in both the queue forming phase and the queue maintenance phase.

In some possible implementations, the method further includes: obtaining a second longitudinal distance between the current location of the vehicle and the location of the leading vehicle, where the second longitudinal distance indicates an interval arc length between the current location of the vehicle and the location of the leading vehicle in a direction of the expected track; and determining the target speed of the vehicle based on the second longitudinal distance, where when the second longitudinal distance is greater than or equal to a fourth distance threshold, the target speed of the vehicle is greater than a current speed of the vehicle and/or the target speed is in a proportional relationship with the second longitudinal distance; or when the second longitudinal distance is less than the fourth distance threshold, a difference between the target speed and the speed of the leading vehicle is less than or equal to a speed threshold.

The fourth distance threshold may be a distance threshold between the vehicle and the leading vehicle in the queue maintenance phase. For example, the fourth distance threshold may be 10 m.

For example, when the second longitudinal distance is greater than or equal to 10 m, the target speed of the vehicle is greater than the current speed of the vehicle, so that the vehicle can accelerate for traveling, to shorten the distance between the vehicle and the leading vehicle. This helps maintain stability of the distance of the intelligent vehicle queue.

When the second longitudinal distance is greater than or equal to 10 m, the target speed of the vehicle is in a proportional relationship with the second longitudinal distance, to be specific, a larger second longitudinal distance indicates a higher target speed of the vehicle. In this way, this helps shorten the distance between the vehicle and the leading vehicle, and helps maintain stability of the distance of the intelligent vehicle queue.

When the second longitudinal distance is less than 10 m, the difference between the target speed of the vehicle and the speed of the leading vehicle is less than or equal to the speed threshold. The speed threshold is a small value.

The difference between the target speed of the vehicle and the speed of the leading vehicle is less than or equal to the speed threshold, so that the target speed of the vehicle is close to the speed of the leading vehicle, to ensure stability of the distance between the vehicle and the leading vehicle. This facilitates stability of the distance of the queue.

In some possible implementations, the determining a target traveling location of the vehicle based on the first information and the location of the leading vehicle includes: determining a location of a virtual leading vehicle of the vehicle based on the first information and the location of the leading vehicle; and determining the target traveling location of the vehicle based on the location of the virtual leading vehicle and a track planning algorithm.

A method for determining, by the vehicle, the location of the virtual leading vehicle of the vehicle based on the first information and the location of the leading vehicle is consistent with the foregoing method for determining, by the vehicle, the target traveling location of the vehicle based on the first information and the location of the leading vehicle. Details are not described herein again.

In the method, a longitudinal distance between the location of the virtual leading vehicle and the leading vehicle is greater than the safe traveling distance, and the first longitudinal distance that is between the target traveling location of the vehicle and the location of the leading vehicle and that is obtained through calculation based on the location of the virtual leading vehicle is also greater than the safe traveling distance. This helps maintain a safe distance between the vehicle and the leading vehicle, and facilitates safe traveling of the intelligent vehicle queue.

In addition, when the vertical distance between the leading vehicle and the expected track is less than or equal to the first distance threshold, a vertical distance between the virtual leading vehicle and the expected track may be approximately equal to the vertical distance between the leading vehicle and the expected track, and the vertical distance that is between the target traveling location of the vehicle and the expected track and that is obtained through calculation based on the virtual leading vehicle may also be approximately equal to the vertical distance between the leading vehicle and the expected track. This helps the traveling track of the vehicle be close to the traveling track of the leading vehicle.

When the vertical distance between the leading vehicle and the expected track is greater than the first distance threshold, a vertical distance between the location of the virtual leading vehicle and the expected track is less than or equal to the third distance threshold. In this way, deviation of the virtual leading vehicle caused by deviation of the leading vehicle can be prevented, thereby avoiding deviation of the entire queue, improving traveling effect of the queue, and ensuring normal traveling of the queue.

The target heading angle of the vehicle is used to determine a target traveling direction of the vehicle. In some possible implementations, the target traveling direction of the vehicle may alternatively be determined based on the virtual leading vehicle.

For example, the vehicle may determine a heading angle of the virtual leading vehicle of the vehicle based on the heading angle of the leading vehicle, and then determine the target traveling direction of the vehicle based on the heading angle of the virtual leading vehicle.

Optionally, the vehicle may determine the target traveling direction of the vehicle based on the heading angle of the virtual leading vehicle with reference to the location of the virtual leading vehicle.

For example, first, the vehicle determines pose information of the virtual leading vehicle, the pose information includes location information and heading angle information of the virtual leading vehicle, the location information indicates the location of the virtual leading vehicle, and the heading angle information indicates the heading angle of the virtual leading vehicle. Then, a target path of the vehicle is determined based on the location information of the virtual leading vehicle and a track planning algorithm. Finally, the target traveling location and the target traveling direction of the vehicle are determined based on the target path.

In the method, when the queue travels in a straight line, the heading angle of the virtual leading vehicle may be basically consistent with the heading angle of the leading vehicle, and the target traveling direction, of the vehicle, that can be obtained through calculation by using the heading angle of the virtual leading vehicle is also closer to the traveling direction of the leading vehicle. This facilitates stability of the traveling direction of the queue.

In the method, when the queue travels in a curve, the heading angle of the virtual leading vehicle may be located between the heading angle of the leading vehicle and the heading angle of the expected track. In this way, the heading angle of the virtual leading vehicle may tend to the tangential direction of the expected track, and the target traveling direction, of the vehicle, that is obtained through calculation based on the virtual leading vehicle also tends to the tangential direction of the expected track, to avoid the vehicle from deviating from the road. This facilitates stable traveling of the queue.

In some possible implementations, the target speed of the vehicle may alternatively be determined based on the virtual leading vehicle.

For example, the vehicle may determine the speed of the virtual leading vehicle based on the curvature of the road on which the vehicle is located, and then determine the target speed of the vehicle based on the speed of the virtual leading vehicle.

In the method, the vehicle determines the speed of the virtual leading vehicle based on the curvature of the road on which the vehicle is located, and the speed of the virtual leading vehicle is inversely proportional to the curvature, so that a case in which the vehicle turns over when traveling on a curve can be avoided, thereby facilitating stable traveling of the vehicle platoon.

In the method, when the second longitudinal distance is greater than or equal to the fourth distance threshold, the speed of the virtual leading vehicle is greater than the current speed of the vehicle, and the target speed, of the vehicle, that is obtained by the virtual leading vehicle through calculation is also greater than the current speed of the vehicle, so that the vehicle can accelerate for traveling, to shorten the distance between the vehicle and the leading vehicle. This helps maintain stability of the distance of the intelligent vehicle queue.

The speed of the virtual leading vehicle is in a proportional relationship with the second longitudinal distance. To be specific, a larger second longitudinal distance indicates a higher speed of the virtual leading vehicle and a higher target speed, of the vehicle, that is obtained through calculation based on the speed of the virtual leading vehicle. In this way, this helps shorten the distance between the vehicle and the leading vehicle, and helps maintain stability of the distance of the intelligent vehicle queue.

When the second longitudinal distance is less than the fourth distance threshold, the difference between the speed of the virtual leading vehicle and the speed of the leading vehicle is less than or equal to the speed threshold, so that the speed of the virtual leading vehicle is close to the speed of the leading vehicle. In this case, the target speed, of the vehicle, that is obtained through calculation based on the speed of the virtual leading vehicle is also close to the speed of the leading vehicle, to ensure stability of the distance between the vehicle and the leading vehicle. This facilitates stability of the distance of the queue.

According to a second aspect, this application provides a vehicle control apparatus. The control apparatus may include functional modules configured to implement the method in the first aspect. For example, the control apparatus includes an obtaining module, a determining module, and a control module.

In some implementations, these modules may be implemented by software and/or hardware. For example, the determining module and the control module may be implemented by a processor by executing program code stored in a memory, and the obtaining module may be implemented by a transceiver. In this implementation, the apparatus may include the processor and the transceiver, and optionally may further include the memory.

It may be understood that the control apparatus provided in the second aspect may be a chip system.

According to a third aspect, this application provides a vehicle. The vehicle includes the control apparatus in the second aspect.

According to a fourth aspect, this application provides a computer-readable storage medium. The computer-readable medium stores program code that is used to control the apparatus to perform execution, and the program code includes instructions used to implement the method in the first aspect.

According to a fifth aspect, this application provides a computer program product including instructions. When the computer program product is run on a control apparatus, the control apparatus is enabled to implement the method in the first aspect.

It may be understood that, for effect that can be obtained in the second aspect, the third aspect, the fourth aspect, and the fifth aspect, refer to descriptions in the first aspect. Details are not described herein.

## BRIEF DESCRIPTION OF DRAWINGS

FIG. 1 is a diagram of an intelligent vehicle queue to which this application is applicable;
FIG. 2 is a diagram of a structure of a vehicle according to an embodiment of this application;
FIG. 3 is a schematic flowchart of a vehicle control method according to an embodiment of this application;
FIG. 4 is a diagram of a first longitudinal distance according to an embodiment of this application;
FIG. 5 is a diagram of a vehicle control method according to another embodiment of this application;
FIG. 6 is a diagram of straight-line traveling of a queue according to an embodiment of this application;
FIG. 7 is a diagram of curve-traveling of a queue according to an embodiment of this application;
FIG. 8 is a diagram of a vehicle control method according to another embodiment of this application;
FIG. 9 is a diagram of a structure of a vehicle control apparatus according to an embodiment of this application; and
FIG. 10 is a diagram of a structure of a vehicle control apparatus according to another embodiment of this application.

## DESCRIPTION OF EMBODIMENTS

The following describes technical solutions in embodiments of this application with reference to accompanying drawings in embodiments of this application.

To clearly describe the technical solutions in embodiments of this application, terms such as "first" and "second" are used in embodiments of this application to distinguish between same items or similar items that have basically the same functions and purposes. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

In comparison with traditional bicycle running, a vehicle running in a form of a queue has obvious advantages in terms of economic benefits and resource utilization. From the perspective of economic benefits, management costs and transportation costs of vehicle operation can be effectively reduced by organizing mass transportation of materials of the queue, thereby improving efficiency. From the perspective of resource utilization, energy consumption of long-distance transportation by a single vehicle is high. Existing data proves that overall energy consumption can be effectively reduced by using a dynamics principle of transportation of the queue, to further reduce transportation costs.

In addition, vehicles in the vehicle queue may travel in a platoon by using communication technologies such as the internet of vehicles and a wireless sensor. This helps improve traveling safety and traveling efficiency of the queue. A vehicle queue that depends on a communication technology may also be referred to as an intelligent vehicle queue.

The intelligent vehicle queue includes a queue forming phase and a queue maintenance phase. In the queue forming phase, a relative distance between a front vehicle and a rear vehicle in the intelligent vehicle queue exceeds a preset distance threshold. In the queue maintenance phase, a relative distance between a front vehicle and a rear vehicle in the intelligent vehicle queue does not exceed a preset distance threshold.

The intelligent vehicle queue may be applied to various autonomous driving scenarios. For example, in the field of goods transportation, a head vehicle in a cargo truck queue may be selected to be driven by a person, and a rear vehicle may be autonomously driven. This not only can reduce labor costs and resources, but also can improve goods transportation efficiency to some extent. For another example, in a mineral mining process, an unmanned mining truck queue is used to perform mining operations in an extreme condition or a complex environment, to effectively reduce traffic stalling of a transportation vehicle at an operating site, improve transportation smoothness of a mining truck, and improve mining and transportation efficiency. For still another example, an unmanned passenger vehicle queue is used in urban traffic, so that traffic congestion in a complex urban transportation environment can be resolved, and urban transportation efficiency can be improved.

FIG. 1 is a diagram of an intelligent vehicle queue to which this application is applicable. As shown in FIG. 1, the intelligent vehicle queue may include m vehicles that travel in order: a vehicle 1, a vehicle 2, ..., and a vehicle m. For example, the vehicle 1 may be used as a first vehicle in the intelligent vehicle queue, and the vehicle 2 to the vehicle m may sequentially follow the vehicle 1 to travel rightwards.

In the intelligent vehicle queue, any two adjacent vehicles may be referred to as one queue unit in the intelligent vehicle queue. In one queue unit, a vehicle that travels in front is referred to as a leading vehicle (which may also be referred to as a front vehicle), and a vehicle that travels behind is referred to as a following vehicle (which may also be referred to as a rear vehicle).

For example, the vehicle 1 and the vehicle 2 are a 1st queue unit. To be specific, the vehicle 1 is a leading vehicle of the vehicle 2, the vehicle 2 is a following vehicle of the vehicle 1, the vehicle 1 is a leading vehicle 1, and the vehicle 2 is a following vehicle 1.

For another example, the vehicle 2 and the vehicle 3 are a 2nd queue unit. To be specific, the vehicle 2 is a leading vehicle of the vehicle 3, the vehicle 3 is a following vehicle of the vehicle 2, the vehicle 2 is a leading vehicle 2, and the vehicle 3 is a following vehicle 2.

By analogy, the vehicle m-1 and the vehicle m are an (m-1)th queue unit. To be specific, the vehicle m-1 is a leading vehicle of the vehicle m, the vehicle m is a following vehicle of the vehicle m-1, the vehicle m-1 is a leading vehicle m-1, and the vehicle m is a following vehicle m-1.

To better understand embodiments of this application, the following describes a structure of a vehicle in embodiments of this application. For example, FIG. 2 is a diagram of a structure of a vehicle according to an embodiment of this application. As shown in FIG. 2, the vehicle 200 may be any one of the m vehicles shown in FIG. 1.

The vehicle 200 may include a processor 210, a traveling system 220, a sensing system 230, a control system 240, a peripheral device 250, a power supply 260, a user interface 270, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and the like. Different processing units may be independent components, or may be integrated into one or more processors. A memory may be further disposed in the processor 210, and is configured to store instructions. For example, the memory may send data, receive data, and exchange and/or control instructions with one or more of the traveling system 220, the sensing system 230, the control system 240, and the peripheral device 250.

For example, the memory may further store data, for example, a road map, route information, a location of the vehicle, a direction, a speed, and other information.

The traveling system 220 may include components configured to provide power movement to the vehicle 200. In an embodiment, the traveling system 220 may include an engine 221, a transmission apparatus 222, an energy source 223, and a wheel (tire) 224.

The engine 221 may be an internal combustion engine, a motor, an air compression engine, or a combination of other types of engines, for example, a hybrid engine consisting of a gasoline engine and a motor, or a hybrid engine consisting of an internal combustion engine and an air compression engine. The engine 221 may convert the energy source 223 into mechanical energy.

For example, the transmission apparatus 222 may include a gearbox, a differential, and a drive shaft, and the transmission apparatus 222 may transmit mechanical power from the engine 221 to the wheel 224. In some embodiments, the transmission apparatus 222 may further include another component, for example, a clutch. The drive shaft may include one or more shafts that can be coupled to one or more wheels 224.

For example, the energy source 223 may include gasoline, diesel, other oil-based fuel, propane, other compressed-gas-based fuel, ethanol, a solar panel, a battery, and another power source. The energy source 223 may also provide energy to another system of the vehicle 200.

The sensing system 230 may include several sensors that sense information about ambient environment of the vehicle 200. For example, the sensing system 230 may include a positioning system 231, an inertial measurement unit (inertial measurement unit, IMU) 232, a radar 233, a laser rangefinder 234, and a camera 235.

The positioning system 231 may be a global positioning system (global positioning system, GPS), or may be a BeiDou system or another positioning system.

The sensing system 230 may further include a sensor, for example, an in-vehicle air quality monitor, a fuel gauge, or an engine oil thermometer in an internal system of the vehicle 200. One or more pieces of sensor data from these sensors maybe used to detect objects and corresponding features (for example, a location, a shape, a direction, and a speed) of the objects. Such detection is a key function of a secure operation of the vehicle 200.

The positioning system 231 may be configured to estimate a geographical location of the vehicle 200. The IMU 232 is configured to sense location and orientation changes of the vehicle 200 based on an inertial acceleration. In some examples, the IMU 232 may be a combination of an accelerometer and a gyroscope.

The radar 233 may sense an object in the ambient environment of the vehicle 200 by using a radio signal. In some examples, in addition to sensing an object, the radar 233 may be further configured to sense a speed and/or a forward direction of the object.

The laser rangefinder 234 may sense an object in an environment in which the vehicle 200 is located by using a laser. In some examples, the laser rangefinder 234 may include one or more laser sources, a laser scanner, one or more detectors, and another system component.

The camera 235 may be configured to capture a plurality of images of the ambient environment of the vehicle 200. The camera 235 may be a static camera or a video camera.

The control system 240 is configured to control the vehicle 200 and a component of the vehicle 200. The control system 240 may include various elements, for example, a steering system 241, an accelerator 242, a braking unit 243, a computer vision system 244, a route control system 245, and an obstacle avoidance system 246.

The steering system 241 may be operated to adjust the forward direction of the vehicle 200. For example, in some embodiments, the steering system 241 may be a steering wheel system.

The accelerator 242 may be configured to control an operation speed of the engine 221, to control a speed of the vehicle 200.

The braking unit 243 may be configured to control the vehicle 200 to decelerate. For example, the braking unit 243 may use friction force to slow down the wheel 224. In some embodiments, the braking unit 243 may further convert kinetic energy of the wheel 224 into a current. Alternatively, the braking unit 243 may slow down a rotational speed of the wheel 224 in another manner, to control the speed of the vehicle 200.

The computer vision system 244 may operate to process and analyze an image captured by the camera 235 to recognize an object and/or a feature in the ambient environment of the vehicle 200. The object and/or feature may include a traffic signal, a road boundary, and an obstacle. The computer vision system 244 may use an object recognition algorithm, a structure from motion (structure from motion, SFM) algorithm, and another computer vision technology. In some embodiments, the computer vision system 244 may be configured to: draw a map for an environment, estimate a speed of the object, and the like.

The route control system 245 may be configured to determine a traveling route of the vehicle 200. In some embodiments, the route control system 245 may determine the traveling route for the vehicle 200 with reference to data from the sensor, the GPS, and one or more maps.

The obstacle avoidance system 246 may be configured to: recognize, and avoid or bypass a potential obstacle in the environment of the vehicle 200 in another manner.

The vehicle 200 may interact with an external sensor, another vehicle, another computer system, or a user through the peripheral device 250. The peripheral device 250 may include a communication module 251, a vehicle-mounted computer 252, a microphone 253, and/or a speaker 254.

In some embodiments, the peripheral device 250 may provide a means for the vehicle 200 to interact with the user interface 270. For example, the vehicle-mounted computer 252 may provide information for the user of the vehicle 200.

The vehicle-mounted computer 252 may further receive an input from the user, and the vehicle-mounted computer 142 may perform an operation through a touchscreen. In another case, the peripheral device 250 may provide a means for the vehicle 200 to communicate with another device in the vehicle. For example, the microphone 253 may receive audio (for example, a voice command or another audio input) from the user of the vehicle 200. Similarly, the speaker 254 may output audio to the user of the vehicle 200.

The communication module 251 may communicate with one or more devices directly or through a communication network. For example, the communication module 251 may use 3G cellular communication, for example, code division multiple access (code division multiple access, CDMA), or a global system for mobile communications (global system for mobile communications, GSM)/general packet radio service (general packet radio service, GPRS); or use 4G cellular communication, for example, long term evolution (long term evolution, LTE); or use 5G cellular communication and some future communication technologies. The communication module 251 may further communicate with a wireless local area network (wireless local area network, WLAN) using wireless fidelity (wireless fidelity, Wi-Fi).

In some embodiments, the communication module 251 may directly communicate with a device through an infrared link, Bluetooth, or a ZigBee (ZigBee) protocol. Optionally, the communication module 251 may include one or more dedicated short range communications (dedicated short range communications, DSRC) devices, and these devices may include public and/or private data communication between vehicles and/or roadside stations.

In some embodiments, the vehicle 200 may further communicate with another vehicle through the communication module 251, to obtain information such as a location, a direction, a speed, and a traveling track of the another vehicle.

The power supply 260 may supply power to various components of the vehicle 200. In some embodiments, the power supply 260 may be a rechargeable lithium-ion battery or lead-acid battery. One or more battery packs of such a battery may be configured as a power supply to supply power to various components of the vehicle 200. In some embodiments, the power supply 260 and the energy source 223 may be implemented together, for example, may be applied to some all-electric vehicles.

The user interface 270 may be configured to provide information for or receive information from the user of the vehicle 200. Optionally, the user interface 270 may be included in one or more input/output devices in a set of peripheral devices 250, for example, the communication module 251, the vehicle-mounted computer 252, the microphone 253, and the speaker 254.

It may be understood that the structure shown in embodiments of this application does not constitute a specific limitation on the vehicle 200. Optionally, the terminal device may include more or fewer components than those shown in FIG. 2, or some components may be combined, or some components may be split, or there may be a different component arrangement. The components shown in the figure may be implemented in hardware, software, or a combination of software and hardware.

In this application, for each queue unit, the following vehicle may determine a running status of the following vehicle based on a running status of the leading vehicle. For example, the vehicle 2 may determine a running status of the vehicle 2 based on a running status of the vehicle 1, the vehicle 3 may determine a running status of the vehicle 3 based on the running status of the vehicle 2, ..., and the vehicle m may determine a running status of the vehicle m based on a running status of the vehicle m-1. Subsequently, in this application, any pair of a leading vehicle and a following vehicle is used as an example for description.

When an intelligent vehicle queue is implemented, a traveling status of a following vehicle needs to be consistent with a traveling status of a leading vehicle as much as possible, that is, stability of the intelligent vehicle queue needs to be maintained. Therefore, how to maintain stability of the intelligent vehicle queue is a technical problem to be urgently resolved.

In the technical solution of this application, the following vehicle may perform real-time communication with the leading vehicle through vehicle-to-vehicle (vehicle-to-vehicle, V2V) communication, to obtain status information of the leading vehicle, and the status information of the leading vehicle may include a location, a heading angle, and a speed. The location of the leading vehicle may be represented by using center-of-mass coordinates of the leading vehicle.

In addition, the following vehicle may further obtain environment information in real time through vehicle-to-everything (vehicle-to-everything, V2X) communication. The environment information may include information such as a curvature of a road and a center line of the road on which the intelligent vehicle queue is located. In some embodiments, the center line of the road on which the intelligent vehicle queue is located may overlap an expected track of the intelligent vehicle queue.

The following vehicle may determine target status information of the following vehicle based on the status information and the environment information of the leading vehicle. The target status information of the following vehicle may include a target location, a target heading angle, and a target speed of the following vehicle.

Further, when determining the target status information of the following vehicle based on the status information and the environment information of the leading vehicle, the following vehicle may further determine the target status information through a virtual leading vehicle.

For example, first, the following vehicle may determine status information of the virtual leading vehicle based on the status information and the environment information of the leading vehicle. The status information of the virtual leading vehicle may include a location, a heading angle, and a speed of the virtual leading vehicle. Then, with reference to a track planning algorithm, the target location and the target heading angle of the following vehicle are determined based on the location and the heading angle of the virtual leading vehicle; and with reference to a speed planning algorithm, the target location and the target speed of the following vehicle are determined based on the speed of the virtual leading vehicle. Finally, the following vehicle is controlled to run based on the target location, the target heading angle, and target speed.

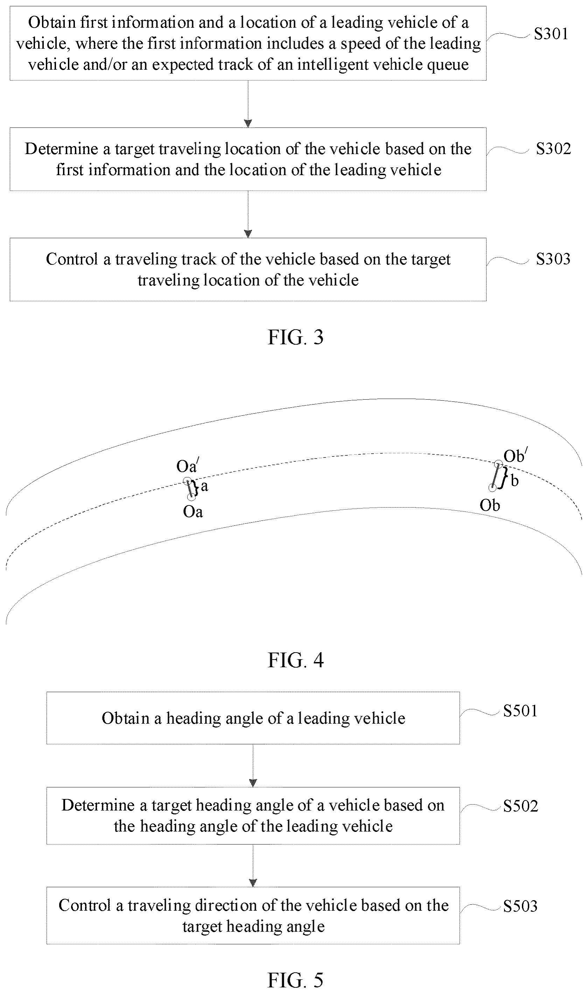

Next, the solution of this application is described in detail with reference to FIG. 3 to FIG. 10.

FIG. 3 is a schematic flowchart of a vehicle control method according to an embodiment of this application. As shown in FIG. 3, the method may include S301 to S303. For example, the method may be performed by a processor or a route control system or a control system in the vehicle shown in FIG. 2.

S301: Obtain first information and a location of a leading vehicle of a vehicle, where the first information includes a speed of the leading vehicle and/or an expected track of an intelligent vehicle queue.

In this embodiment, the vehicle may be any vehicle other than the vehicle 1 in the intelligent vehicle queue shown in FIG. 1. The leading vehicle of the vehicle (which is a leading vehicle for short below) and the vehicle are located in one queue unit, and the leading vehicle of the vehicle is in one-to-one correspondence with the vehicle.

For example, the vehicle may be the vehicle 2 in the embodiment shown in FIG. 1, and correspondingly the leading vehicle is the vehicle 1.

For another example, the vehicle may alternatively be the vehicle 3 in the embodiment shown in FIG. 1, and correspondingly the leading vehicle is the vehicle 2.

Optionally, the vehicle may perform real-time communication with the leading vehicle through V2V, to obtain a speed of the leading vehicle.

For example, the leading vehicle may obtain the speed of the leading vehicle in real time, and send speed information to the vehicle. The speed information indicates the speed of the leading vehicle. Correspondingly, the vehicle receives the speed information. In some embodiments, the leading vehicle may obtain the speed of the leading vehicle based on an IMU and a positioning system.

Optionally, the vehicle may perform real-time communication with the leading vehicle through V2V, to obtain a location of the leading vehicle.

For example, the leading vehicle may obtain the location of the leading vehicle in real time, and send location information to the vehicle. The location information indicates the location of the leading vehicle. Correspondingly, the vehicle receives the location information of the leading vehicle. In some embodiments, the leading vehicle may obtain the location of the leading vehicle based on the positioning system. The location information of the leading vehicle may be represented by using center-of-mass coordinates of the leading vehicle.

In some embodiments, the expected track of the intelligent vehicle queue may overlap a center line of a road on which the intelligent vehicle queue is located. In this case, the vehicle may obtain, in real time based on V2X, a location of the center line of the road on which the vehicle is located, and determine the expected track of the intelligent vehicle queue based on the location of the center line. For ease of understanding, this application is subsequently described by using an example in which the expected track overlaps the center line of the road.

S302: Determine a target traveling location of the vehicle based on the first information and the location of the leading vehicle.

When the first information includes the speed of the leading vehicle, a method for determining the target traveling location of the vehicle based on the first information and the location of the leading vehicle may include: determining a first longitudinal distance based on the speed of the leading vehicle, a speed of the vehicle, and a safe traveling distance, where the first longitudinal distance indicates an interval arc length between the target traveling location of the vehicle and the location of the leading vehicle on the expected track; and determining the target traveling location of the vehicle based on the first longitudinal distance and the location of the leading vehicle.

The first longitudinal distance separately meets a positive correlation relationship with the speed of the leading vehicle, the speed of the vehicle, and a relative speed, the first longitudinal distance is greater than or equal to the safe traveling distance, and the relative speed is a relative speed between the leading vehicle and the vehicle.

In this embodiment, the target traveling location of the vehicle may be represented by using target center-of-mass coordinates of the vehicle.

In this embodiment, the vehicle may obtain the speed of the vehicle based on the IMU and the positioning system.

FIG. 4 is a diagram of a first longitudinal distance according to an embodiment of this application. A dashed line indicates the expected track of the intelligent vehicle queue. In this embodiment, the expected track is the center line of the road on which the intelligent vehicle queue is located,

Assuming that the target center-of-mass coordinates of the vehicle and the center-of-mass coordinates of the leading vehicle are respectively Oa and Ob, and location coordinates of the target center-of-mass coordinates of the vehicle and the center-of-mass coordinates of the leading vehicle on the expected track are respectively $Oa^{/}$ and $Ob^{/}$, the first longitudinal distance is an arc length between Oa' and Ob' on the expected track. A connection line between the target center-of-mass coordinates of the vehicle and a location of the target center-of-mass coordinates of the vehicle on the expected track is perpendicular to a tangent line of the expected track, and a connection line between the center-of-mass coordinates of the leading vehicle and a location of the leading vehicle on the expected track is also perpendicular to the tangent line of the expected track.

For example, the first longitudinal distance may be calculated according to a formula (1):

$$L_1 = \frac{(V_l - V_f)^2}{k_1 V_f} + k_2 V_f + k_3 V_l + D_s \qquad (1),$$

where

$L_1$ indicates the first longitudinal distance, $V_l$ indicates the speed of the vehicle, $V_f$ indicates the speed of the leading vehicle, $D_s$ indicates the safe traveling distance, the safe traveling distance may be a preset value, and $k_1$, $k_2$, and $k_3$ are all greater than 0.

Assuming that the first longitudinal distance calculated based on the speed of the vehicle, the speed of the leading vehicle, and the safe traveling distance is 3 meters (m), a location that is of the leading vehicle of the vehicle and that is 3 meters behind the expected track may be determined as the target traveling distance of the vehicle.

When the first information includes the expected track, a method for determining, by the vehicle, the target traveling location of the vehicle based on the first information and the location of the leading vehicle may include: determining a lateral distance based on the location of the leading vehicle and the expected track, where the lateral distance indicates a deviation distance between the target traveling location of the vehicle and the location of the leading vehicle in a vertical direction of the expected track; and determining the target traveling location of the vehicle based on the lateral distance and the location of the leading vehicle.

In this embodiment, when a vertical distance between the location of the leading vehicle and the expected track (namely, a distance between the location of the leading vehicle and the expected track in the vertical direction of the expected track) is less than or equal to a first distance threshold, the lateral distance is less than or equal to a second distance threshold; or when the vertical distance between the location of the leading vehicle and the expected track is greater than the first distance threshold, the lateral distance enables a vertical distance between the target traveling location of the vehicle and the expected track to be less than or equal to a third distance threshold.

The first distance threshold may indicate a maximum vertical distance between the vehicle in the intelligent vehicle queue and the expected track. For example, the first distance threshold may be 1 m.

The second distance threshold may indicate a maximum threshold of a lateral distance, and the second distance threshold is a small value. For example, the second distance threshold may be 0.1 m.

The third distance threshold may indicate a maximum vertical distance between the target location of the vehicle and the expected track. Optionally, the third distance threshold may be equal to or slightly less than the first distance threshold. For example, the third distance threshold may be 0.9 m.

As shown in FIG. 4, a indicates a straight-line distance between Oa and Oa', and indicates the vertical distance between the target traveling location of the vehicle and the expected track, and b indicates a straight-line distance between Ob and Ob', and indicates the vertical distance between the location of the leading vehicle and the expected track. In this embodiment, b-a indicates the deviation distance between the target traveling location of the vehicle and the location of the leading vehicle in the vertical direction of the expected track, that is, indicates the lateral distance.

When b is less than or equal to 1 m, because the vertical distance between the leading vehicle and the expected track does not exceed the maximum vertical distance, that is, the leading vehicle does not deviate from the expected track, a value of b-a is set to be less than 0.1 m, so that the vertical distance between the vehicle and the expected track is close to the vertical distance between the leading vehicle and the expected track. This helps the vehicle approach a traveling track of the leading vehicle.

For example, assuming that b is equal to 0.5 m, the value of b-a may be set to 0.05 m, and the vertical distance between the vehicle and the expected track is 0.45 m or 0.55 m.

When b is greater than 1 m, the vertical distance between the leading vehicle and the expected track exceeds the maximum vertical distance, that is, the leading vehicle deviates from the expected track. In this case, b-a may be set to a large value, and the vertical distance (namely, a) between the vehicle and the expected track is less than 0.9 m. In this way, when the leading vehicle deviates from the expected track, the vehicle may adjust a vertical distance between the target traveling distance and the expected track, so that the target location of the vehicle does not deviate from the expected track. This facilitates stable traveling of the intelligent vehicle queue.

For example, assuming that b is equal to 1.5 m, the value of b-a may be set to 1 m, that is, a value of a is 0.5 m, so that the vehicle approaches the expected track when the leading vehicle deviates from the expected track.

In this embodiment, after determining the lateral distance, the vehicle may determine, based on the lateral distance, the vertical distance between the target traveling location of the vehicle and the expected track. Further, the vehicle may further determine the target traveling location of the vehicle based on the first longitudinal distance.

In this embodiment, the first longitudinal distance may be dynamically adjusted based on the speed of the vehicle and the speed of the leading vehicle, so that the first longitudinal distance better conforms to an actual running status of the vehicle. The first longitudinal distance is greater than the safe traveling distance, so that a safe distance is always maintained between the vehicle and the leading vehicle. This facilitates safe traveling of the intelligent vehicle queue. In addition, when the vertical distance between the location of the leading vehicle and the expected track is less than or equal to the first distance threshold, the lateral distance is less than or equal to the second distance threshold, so that the vertical distance between the target traveling location of the vehicle and the expected track may be close to the vertical distance between the location of the leading vehicle and the expected track. This helps a traveling track of the vehicle be close to the traveling track of the leading vehicle. When the vertical distance between the location of the leading vehicle and the expected track is less than or equal to the first distance threshold, the vertical distance between the target traveling location of the vehicle and the expected track is less than or equal to the third distance threshold. In this way, deviation of the vehicle caused by deviation of the leading vehicle can be prevented, thereby avoiding deviation of the entire queue, improving traveling effect of the queue, and ensuring normal traveling of the queue.

Optionally, the target traveling location of the vehicle may alternatively be determined by using a location of a virtual leading vehicle.

For example, the vehicle may first determine the location of the virtual leading vehicle of the vehicle based on the first information and the location of the leading vehicle, and then determine the target traveling location of the vehicle based on the location of the virtual leading vehicle and a track planning algorithm.

A method for determining, by the vehicle, the location of the virtual leading vehicle of the vehicle based on the first information and the location of the leading vehicle is consistent with the foregoing method for determining, by the vehicle, the target traveling location of the vehicle based on the first information and the location of the leading vehicle. Details are not described herein again.

In this embodiment, when determining the target traveling location of the vehicle based on the location of the virtual leading vehicle and the track planning algorithm, the vehicle may use the location of the virtual leading vehicle as the target location, use a current location of the vehicle as a start location, and then determine a target traveling track of the vehicle by using the track planning algorithm, to determine the target traveling location of the vehicle.

There are many track planning algorithms to which this application is applicable. This is not limited. For example, the track planning algorithm may include two types: one type is a curve interpolation method, for example, a straight line and an arc segment, a polynomial curve, a cyclone curve, and a spline curve; and the second type is a sampling-based search method, for example, a Dijkstra (Dijkstra) algorithm, an A* algorithm, and an artificial potential field method.

In this application, for a method for determining the target traveling track of the vehicle based on the track planning algorithm, refer to the conventional technology. Details are not described herein.

In this embodiment, a longitudinal distance between the location of the virtual leading vehicle and the leading vehicle is greater than the safe traveling distance, and the first longitudinal distance that is between the target traveling location of the vehicle and the location of the leading vehicle and that is obtained through calculation based on the location of the virtual leading vehicle is also greater than the safe traveling distance. This helps maintain a safe distance between the vehicle and the leading vehicle, and facilitates safe traveling of the intelligent vehicle queue.

In addition, when the vertical distance between the leading vehicle and the expected track is less than or equal to the first distance threshold, a vertical distance between the virtual leading vehicle and the expected track may be approximately equal to the vertical distance between the leading vehicle and the expected track, and the vertical distance that is between the target traveling location of the vehicle and the expected track and that is obtained through calculation based on the virtual leading vehicle may also be approximately equal to the vertical distance between the leading vehicle and the expected track. This helps the traveling track of the vehicle be close to the traveling track of the leading vehicle.

When the vertical distance between the leading vehicle and the expected track is greater than the first distance threshold, a vertical distance between the location of the virtual leading vehicle and the expected track is less than or equal to the third distance threshold. In this way, deviation of the virtual leading vehicle caused by deviation of the leading vehicle can be prevented, thereby avoiding deviation of the entire queue, improving traveling effect of the queue, and ensuring normal traveling of the queue.

S303: Control the traveling track of the vehicle based on the target traveling location of the vehicle.

In this application, when the traveling track of the vehicle is controlled based on the target traveling location, this may be implemented based on a traveling system and a control system. For example, the traveling system may provide power for the vehicle, and a steering system in the control system may control the vehicle to move toward the target traveling location.

In this embodiment, a method for determining the target traveling location of the vehicle may be applied to both a queue forming phase and a queue maintenance phase. To be specific, the vehicle may determine the target traveling location of the vehicle by using the method in any phase or at any moment. This simplifies a process of calculating the target location of the vehicle, and helps improve traveling efficiency of the vehicle.

In the technical solution of this application, this application may further provide a vehicle control method, to determine a target traveling direction of a vehicle.

FIG. 5 is a diagram of a vehicle control method according to another embodiment of this application. As shown in FIG. 5, the control method may include S501 to S503. For example, the method may be performed by a processor or a route control system or a control system in the vehicle shown in FIG. 2.

S501: Obtain a heading angle of a leading vehicle.

In this embodiment, the vehicle may be any vehicle other than the vehicle 1 in the intelligent vehicle queue shown in FIG. 1. The leading vehicle of the vehicle (which is a leading vehicle for short below) and the vehicle are located in one queue unit, and the leading vehicle of the vehicle is in one-to-one correspondence with the vehicle.

For example, the vehicle may be the vehicle 2 in the embodiment shown in FIG. 1, and correspondingly the leading vehicle is the vehicle 1.

For another example, the vehicle may alternatively be the vehicle 3 in the embodiment shown in FIG. 1, and correspondingly the leading vehicle is the vehicle 2.

In this embodiment, the vehicle may perform real-time communication with the leading vehicle through V2V, to obtain the heading angle of the leading vehicle.

For example, the leading vehicle may obtain the heading angle of the leading vehicle in real time, and send heading angle information to the vehicle. The heading angle information indicates the heading angle of the leading vehicle. Correspondingly, the vehicle receives the heading angle information. In some embodiments, the leading vehicle may obtain the heading angle of the leading vehicle based on an IMU and a positioning system.

S502: Determine a target heading angle of the vehicle based on the heading angle of the leading vehicle.

When an expected track between a current location of the vehicle and a location of the leading vehicle is a straight line, that is, when a queue travels in a straight line, a difference between the target heading angle of the vehicle and the heading angle of the leading vehicle is less than or equal to a heading angle threshold.

The heading angle threshold is a small threshold. For example, the heading angle threshold may be 2 degrees ($°$).

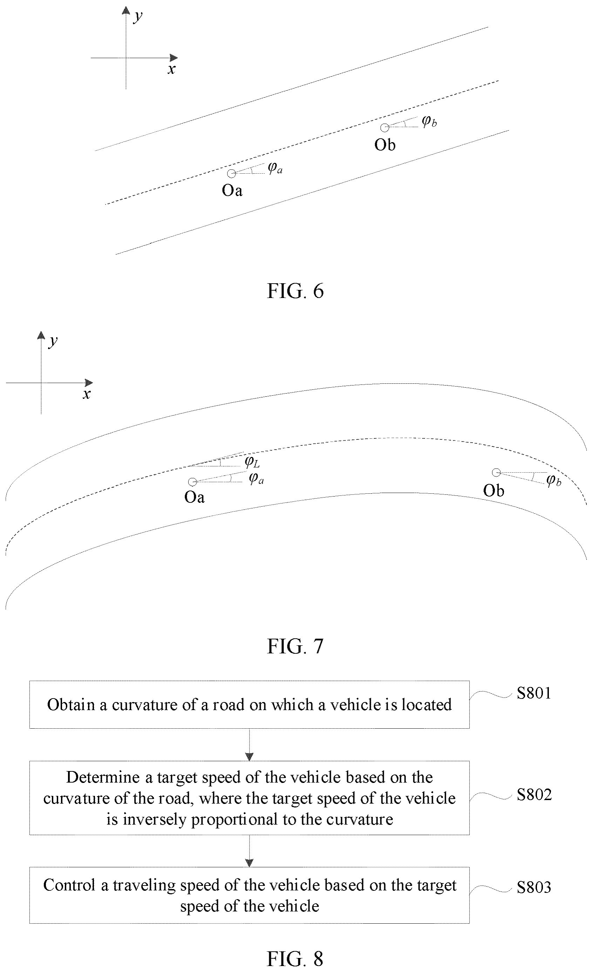

FIG. 6 is a diagram of straight-line traveling of a queue according to an embodiment of this application. Assuming that target center-of-mass coordinates of the vehicle and center-of-mass coordinates of the leading vehicle are respectively Oa and Ob, and the target heading angle of the vehicle and the heading angle of the leading vehicle are respectively $\varphi_a$ and $\varphi_b$.

In this example, assuming that the heading angle of the leading vehicle is 20°, the target heading angle of the vehicle may be between 18° and 22°. In this way, when the vehicle platoon travels in a straight line, the target heading angle of the vehicle may be basically consistent with the heading angle of the leading vehicle, to ensure that traveling directions of the vehicle and the leading vehicle are stable. This facilitates stability of the traveling direction of the queue.

When the expected track between the current location of the vehicle and the location of the leading vehicle is a curve, that is, when the queue travels in a curve, the target heading angle of the vehicle is between the heading angle of the leading vehicle and a heading angle of the expected track between the current location of the vehicle and the location of the leading vehicle.

The heading angle of the expected track may be equivalent to a road heading angle.

FIG. 7 is a diagram of curve-traveling of a queue according to an embodiment of this application. Assuming that target center-of-mass coordinates of the vehicle and center-of-mass coordinates of the leading vehicle are respectively Oa and Ob, the target heading angle of the vehicle and the heading angle of the leading vehicle are respectively $\varphi_a$ and $\varphi_b$, and it is assumed that the heading angle of the expected track between the current location of the vehicle and the location of the leading vehicle is $\varphi_L$.

In this example, assuming that the heading angle of the leading vehicle is 10°, and the heading angle of the expected track is -10°, the target heading angle of the vehicle may be between -10° and 10°. In this way, when the vehicle platoon travels in a curve, the target heading angle of the vehicle may tend to a tangential direction of the expected track, that is, may tend to a tangential direction of a center line of a road on which the vehicle is located, to prevent the vehicle from deviating from the road. This facilitates stable traveling of the queue.

In an example, the target heading angle of the vehicle may be calculated according to a formula (2):

$$\varphi_a = k_4\varphi_L + k_5\varphi_b \qquad (2),$$

where

both $k_4$ and $k_5$ are greater than 0.

In some embodiments, a value of $k_4$ and $k_5$ may be 1. In this case, when the vehicle platoon travels in a straight line, the heading angle of the expected track is 0, that is, $\varphi_L$ is equal to 0, and the target heading angle of the vehicle may be equal to the heading angle of the leading vehicle. When the vehicle platoon travels in a curve, the target heading angle of the vehicle may be located between the heading angle of the leading vehicle and the heading angle of the expected track, to prevent the vehicle from deviating from the road.

S503: Control a traveling direction of the vehicle based on the target heading angle.

In this embodiment, after determining the target heading angle, the vehicle may control, by using the control system, the vehicle to travel based on the target heading angle.

Optionally, the traveling direction of the vehicle may be further determined based on a virtual leading vehicle.

For example, the vehicle may determine a heading angle of the virtual leading vehicle of the vehicle based on the heading angle of the leading vehicle, and then determine the target traveling direction of the vehicle based on the heading angle of the virtual leading vehicle.

A method for determining, by the vehicle, the heading angle of the virtual leading vehicle of the vehicle based on the heading angle of the leading vehicle is consistent with the foregoing method for determining, by the vehicle, the target heading angle of the vehicle based on the heading angle of the leading vehicle. Details are not described herein again.

Optionally, the vehicle may determine the target traveling direction of the vehicle based on the heading angle of the virtual leading vehicle with reference to a location of the virtual leading vehicle.

For example, first, the vehicle determines pose information of the virtual leading vehicle, the pose information includes location information and heading angle information of the virtual leading vehicle, the location information indicates the location of the virtual leading vehicle, and the heading angle information indicates the heading angle of the virtual leading vehicle. Then, a target path of the vehicle is determined based on the location information of the virtual leading vehicle and a track planning algorithm. Finally, the target traveling location and the target traveling direction of the vehicle are determined based on the target path.

Next, this application is described by using an example in which the track planning algorithm is a quintic polynomial curve interpolation method.

Assuming that a pose of the virtual leading vehicle is $P_e$, $P_e = [x_e, y_e, \varphi_e]$, where $[x_e, y_e]$ indicates the location of the virtual leading vehicle, and $\varphi_e$ indicates the heading angle of the virtual leading vehicle.

Assuming that a current pose of the vehicle is $P_s$, $P_s = [x_s, y_s, \varphi_s]$, where $[x_s, y_s]$ indicates the current location of the vehicle, and $\varphi_s$ indicates a current heading angle of the vehicle.

$P_s$ is used as a start point and $P_e$ is used as an end point, and the target path of the vehicle may be calculated according to a formula (3):

$$L = Quintic(p_s, p_e) \qquad\qquad (3),$$

where

$L$ indicates the target path of the vehicle, and *Quintic* indicates a quintic polynomial curve interpolation process.

In this embodiment, after determining the target path, the vehicle may control, by using a traveling system or the control system, the vehicle to travel based on the target path.

In this embodiment, when the queue travels in a straight line, the heading angle of the virtual leading vehicle may be basically consistent with the heading angle of the leading vehicle, and the target traveling direction, of the vehicle, that can be obtained through calculation by using the heading angle of the virtual leading vehicle is also closer to the traveling direction of the leading vehicle. This facilitates stability of the traveling direction of the queue.

In this embodiment, when the queue travels in a curve, the heading angle of the virtual leading vehicle may be located between the heading angle of the leading vehicle and the heading angle of the expected track. In this way, the heading angle of the virtual leading vehicle may tend to the tangential direction of the expected track, and the target traveling direction, of the vehicle, that is obtained through calculation based on the virtual leading vehicle also tends to the tangential direction of the expected track, to avoid the vehicle from deviating from the road. This facilitates stable traveling of the queue.

In this embodiment, a method for determining the target traveling direction of the vehicle may be applied to both a queue forming phase and a queue maintenance phase. To be specific, the vehicle may calculate the target traveling direction of the vehicle by using the method in any phase or at any moment. This simplifies a process of calculating the target direction of the vehicle, and helps improve traveling efficiency of the vehicle.

In the technical solution of this application, this application may further provide a vehicle control method, to determine a target speed of a vehicle.

FIG. 8 is a diagram of a vehicle control method according to another embodiment of this application. As shown in FIG. 8, the control method may include S801 to S803. For example, the method may be performed by a processor or a route control system or a control system in the vehicle shown in FIG. 2.

S801: Obtain a curvature of a road on which a vehicle is located.

In this embodiment, the vehicle may be any vehicle other than the vehicle 1 in the intelligent vehicle queue shown in FIG. 1. A leading vehicle of the vehicle (which is a leading vehicle for short below) and the vehicle are located in one queue unit, and the leading vehicle of the vehicle is in one-to-one correspondence with the vehicle.

For example, the vehicle may be the vehicle 2 in the embodiment shown in FIG. 1, and correspondingly the leading vehicle is the vehicle 1.

For another example, the vehicle may alternatively be the vehicle 3 in the embodiment shown in FIG. 1, and correspondingly the leading vehicle is the vehicle 2.

In this embodiment, the vehicle may obtain, in real time through V2X, the curvature of the road on which the vehicle is located.

S802: Determine a target speed of the vehicle based on the curvature of the road, where the target speed of the vehicle is inversely proportional to the curvature.

In this embodiment, the target speed of the vehicle is inversely proportional to the curvature, so that a case in which the vehicle turns over when traveling on a curve can be avoided, thereby facilitating stable traveling of the vehicle platoon.

In addition, the method may be applied to both a queue forming phase and a queue maintenance phase, that is, the target speed of the vehicle is always inversely proportional to the curvature of the road, so that the vehicle platoon can stably travel in both the queue forming phase and the queue maintenance phase.

Further, the vehicle may further adjust the target speed of the vehicle based on an actual distance between the vehicle and the leading vehicle. In this embodiment, the actual distance between the vehicle and the leading vehicle may be approximately equal to an interval arc length between a current location of the vehicle and a location of the leading vehicle in a direction of an expected track.

For example, the vehicle first obtains a second longitudinal distance between the current location of the vehicle and the location of the leading vehicle, where the second longitudinal distance indicates an interval arc length between the current location of the vehicle and the location of the leading vehicle in a direction of the expected track; and then determines the target speed of the vehicle based on the second longitudinal distance.

When the second longitudinal distance is greater than or equal to a fourth distance threshold, the target speed of the vehicle is greater than a current speed of the vehicle and/or the target speed of the vehicle is in a proportional relationship with the second longitudinal distance.

The fourth distance threshold may be a distance threshold between the vehicle and the leading vehicle in the queue maintenance phase. For example, the fourth distance threshold may be 10 m.

In this embodiment, the vehicle may obtain the speed of the vehicle based on a positioning system and an inertial measurement unit.

The target speed of the vehicle is greater than the current speed of the vehicle, so that the vehicle can accelerate for traveling, to shorten the distance between the vehicle and the leading vehicle. This helps maintain stability of the distance of the intelligent vehicle queue.

The target speed of the vehicle is in a proportional relationship with the second longitudinal distance, to be specific, a larger second longitudinal distance indicates a higher target speed of the vehicle. In this way, this helps shorten the distance between the vehicle and the leading vehicle, and helps maintain stability of the distance of the intelligent vehicle queue.

For example, when the second longitudinal distance is greater than or equal to the fourth distance threshold, the target speed of the vehicle may be calculated according to a formula (4):

$$V = (V_l + k_6 L_2)/curve \qquad (4),$$

where

$V$ indicates the target speed of the vehicle, $V_l$ indicates the current speed of the vehicle, $L_2$ indicates the second longitudinal distance, $curve$ indicates the curvature of the road on which the vehicle is located, and $k_6$ is greater than 0.

When the second longitudinal distance is less than the fourth distance threshold, a difference between the target speed of the vehicle and the speed of the leading vehicle is less than or equal to a speed threshold. The speed threshold is a small value. For example, the speed threshold may be 2 meters/second (m/s)

The difference between the target speed of the vehicle and the speed of the leading vehicle is less than or equal to the speed threshold, so that the target speed of the vehicle is close to the speed of the leading vehicle, to ensure stability of the distance between the vehicle and the leading vehicle. This facilitates stability of the distance of the queue.

Optionally, the target speed of the vehicle may be adjusted based on the second longitudinal distance.

For example, when the second longitudinal distance is less than the fourth distance threshold, the target speed of the vehicle may be calculated according to a formula (5):

$$V = k_7 L_2/curve \qquad (5),$$

where

$k_7$ is greater than 0.

Optionally, the target speed of the vehicle may be further determined based on a virtual leading vehicle.

For example, the vehicle may determine a speed of the virtual leading vehicle based on the curvature of the road on which the vehicle is located, and then determine the target speed of the vehicle based on the speed of the virtual leading vehicle.

The vehicle determines the speed of the virtual leading vehicle based on the curvature of the road on which the vehicle is located, and the speed of the virtual leading vehicle is inversely proportional to the curvature.

Further, the vehicle may further adjust a target speed of the virtual leading vehicle based on an actual distance between the vehicle and the leading vehicle. In this embodiment, the actual distance between the vehicle and the leading vehicle may be approximately equal to the interval arc length between the current location of the vehicle and the location of the leading vehicle in the direction of the expected track.

For example, the vehicle first obtains a second longitudinal distance between the current location of the vehicle and the location of the leading vehicle, where the second longitudinal distance indicates an interval arc length between the current location of the vehicle and the location of the leading vehicle in a direction of the expected track; and then determines the speed of the virtual leading vehicle based on a third longitudinal distance, where the third longitudinal distance indicates an interval arc length between a location of the virtual leading vehicle and the location of the leading vehicle in the direction of the expected track.

When the second longitudinal distance is greater than or equal to the fourth distance threshold, the speed of the virtual leading vehicle is greater than the current speed of the vehicle and/or the target speed of the vehicle is in a proportional relationship with the third longitudinal distance.

For example, when the second longitudinal distance is greater than or equal to the fourth distance threshold, the speed of the virtual leading vehicle may be calculated according to a formula (6):

$$V = (V_l + k_6 L_3)/curve \qquad (6),$$

where

$L_3$ indicates the third longitudinal distance.

When the second longitudinal distance is less than the fourth distance threshold, a difference between the speed of the virtual leading vehicle and the speed of the leading vehicle is less than or equal to the speed threshold.

Optionally, the speed of the virtual leading vehicle may be adjusted based on the third longitudinal distance.

For example, when the second longitudinal distance is less than the fourth distance threshold, the speed of the virtual leading vehicle may be calculated according to a formula (7):

$$V = k_7 L_3/curve \qquad (7)$$

In this embodiment, that the vehicle determines the target speed of the vehicle based on the speed of the virtual leading vehicle may include: determining the target speed of the vehicle based on the speed of the virtual leading vehicle, the location of the virtual leading vehicle, and a speed planning algorithm.

In an example, the target speed of the vehicle may be calculated according to a formula (8):

$$\begin{cases} \min_{V(s),A(s)} J = \lambda_1 J_T + \lambda_2 J_s \\ s.t. R_S, R_A, R_V \end{cases} \qquad (8),$$

where

$J$ indicates the target speed of the vehicle, $J_T$ indicates a shortest traveling time performance indicator, $J_S$ indicates a speed smoothness performance indicator, $R_S$ indicates a vehicle movement constraint, $R_A$ indicates a maximum acceleration, $R_V$ indicates a speed boundary value condition of the vehicle and the virtual leading vehicle, and $V(s)$ and $A(s)$ respectively indicate the speed and the acceleration of the vehicle.

In the formula, $J_T$ requires that time required when the vehicle is from the current location to the location of the virtual leading vehicle be the shortest; $J_S$ requires that an acceleration change rate when the vehicle is from the current location to the location of the virtual leading vehicle be as small as possible, so that the speed of the vehicle is smoother; $R_S$ requires that the speed and the acceleration of the vehicle when the vehicle is from the current location to the location of the virtual leading vehicle need to conform to a displacement formula; $R_A$ requires that the acceleration of the vehicle when the vehicle is from the current location to the location of the virtual leading vehicle cannot exceed a maximum acceleration, and the speed of the vehicle cannot exceed a maximum speed; and $R_V$ requires that the speed and the acceleration of the vehicle when the vehicle is from the current location to the location of the virtual leading vehicle cannot be 0.

The constraint condition in the formula (8) is the conventional technology, and details are not described in this application.

In this embodiment, when the second longitudinal distance is greater than or equal to the fourth distance threshold, the speed of the virtual leading vehicle is greater than the current speed of the vehicle, and the target speed, of the vehicle, that is obtained by the virtual leading vehicle through calculation is also greater than the current speed of the vehicle, so that the vehicle can accelerate for traveling, to shorten the distance between the vehicle and the leading vehicle. This helps maintain stability of the distance of the intelligent vehicle queue.

The speed of the virtual leading vehicle is in a proportional relationship with the second longitudinal distance. To be specific, a larger second longitudinal distance indicates a higher speed of the virtual leading vehicle and a higher target speed, of the vehicle, that is obtained through calculation based on the speed of the virtual leading vehicle. In this way, this helps shorten the distance between the vehicle and the leading vehicle, and helps maintain stability of the distance of the intelligent vehicle queue.

When the second longitudinal distance is less than the fourth distance threshold, the difference between the speed of the virtual leading vehicle and the speed of the leading vehicle is less than or equal to the speed threshold, so that the speed of the virtual leading vehicle is close to the speed of the leading vehicle. In this case, the target speed, of the vehicle, that is obtained through calculation based on the speed of the virtual leading vehicle is also close to the speed of the leading vehicle, to ensure stability of the distance between the vehicle and the leading vehicle. This facilitates stability of the distance of the queue.

S803: Control the traveling speed of the vehicle based on the target speed of the vehicle.

In this embodiment, after determining the target speed of the vehicle, the vehicle may control, based on the control system of the vehicle, the vehicle to travel based on the target speed.

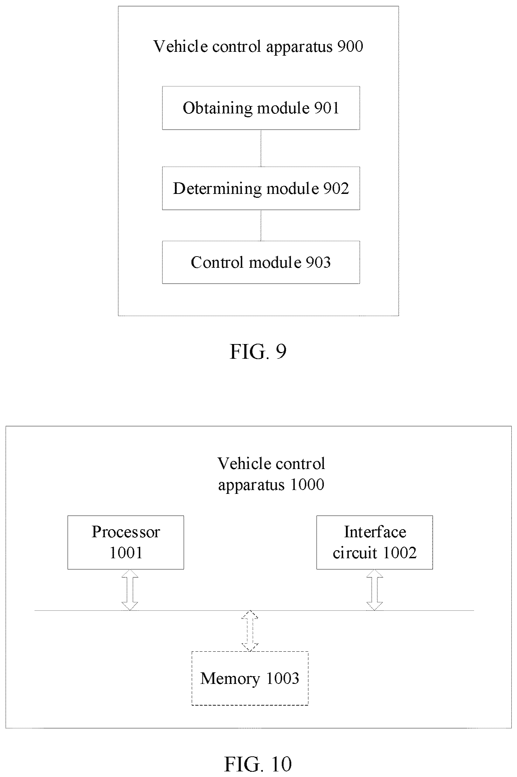

FIG. 9 is a diagram of a structure of a vehicle control apparatus according to an embodiment of this application. As shown in FIG. 9, the vehicle control apparatus 900 includes an obtaining module 901, a determining module 902, and a control module 903.

In an example, the control apparatus 900 may be configured to implement the processing method in the embodiment shown in FIG. 3. The obtaining module 901 may be configured to perform S301, the determining module 902 may be configured to perform S302, and the control module 903 may be configured to perform S303.

In another example, the control apparatus 900 may be configured to implement the processing method in the embodiment shown in FIG. 5. The obtaining module 901 may be configured to perform S501, the determining module 902 may be configured to perform S502, and the control module 903 may be configured to perform S503.

In still another example, the control apparatus 900 may be configured to implement the processing method in the embodiment shown in FIG. 8. The obtaining module 901 may be configured to perform S801, the determining module 902 may be configured to perform S802, and the control module 903 may be configured to perform S803.

FIG. 10 is a diagram of a structure of a vehicle control apparatus according to another embodiment of this application. As shown in FIG. 10, the vehicle control apparatus 1000 may include a processor 1001 and an interface circuit 1002. The processor 1001 and the interface circuit 1002 are coupled to each other. It may be understood that the interface circuit 1002 may be a transceiver or an input/output interface. Optionally, the control apparatus 1000 may further include a memory 1003, configured to store instructions executed by the processor 1001, or store input data required by the processor 1001 to run instructions, or store data generated after the processor 1001 runs instructions.

In an example, the processor 1001 may be configured to implement functions of the determining module 902 and the control module 903. The interface circuit 1002 may be configured to implement a function of the obtaining module 901.

The control apparatus 1000 may be a controller, or may be a chip used in the controller.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

All or some of the foregoing embodiments may be implemented by software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.  A vehicle control method, wherein a vehicle is a vehicle in an intelligent vehicle queue, and the method comprises:

    obtaining first information and a location of a leading vehicle of the vehicle, wherein the first information comprises a speed of the leading vehicle and/or an expected track of the intelligent vehicle queue;
    determining a target traveling location of the vehicle based on the first information and the location of the leading vehicle; and
    controlling a traveling track of the vehicle based on the target traveling location.

2.  The method according to claim 1, wherein when the first information comprises the speed of the leading vehicle, the determining a target traveling location of the vehicle based on the first information and the location of the leading vehicle comprises:

    determining a first longitudinal distance based on the speed of the leading vehicle, a speed of the vehicle, and a safe traveling distance, wherein the first longitudinal distance indicates an interval arc length between the target traveling location of the vehicle and the location of the leading vehicle on the expected track, the first longitudinal distance separately meets a positive correlation relationship with the speed of the leading vehicle, the speed of the vehicle, and a relative speed, the first longitudinal distance is greater than or equal to the safe traveling distance, and the relative speed is a relative speed between the leading vehicle and the vehicle; and
    determining the target traveling location based on the first longitudinal distance and the location of the leading vehicle.

3.  The method according to claim 1 or 2, wherein when the first information comprises the expected track, the determining a target traveling location of the vehicle based on the first information and the location of the leading vehicle comprises:

    determining a lateral distance based on the location of the leading vehicle and the expected track, wherein the lateral distance indicates a deviation distance between the target traveling location of the vehicle and the location of the leading vehicle in a vertical direction of the expected track, and the lateral distance is less than or equal to a second distance threshold when a distance between the location of the leading vehicle and the expected track in the vertical direction is less than or equal to a first distance threshold, or the lateral distance enables a distance between the target traveling location and the expected track in the vertical direction to be less than or equal to a third distance threshold when the distance between the location of the leading vehicle and the expected track in the vertical direction is greater than the first distance threshold; and
determining the target traveling location based on the lateral distance and the location of the leading vehicle.

4.   The method according to any one of claims 1 to 3, wherein the method further comprises:

   obtaining a heading angle of the leading vehicle; and
   determining a target heading angle of the vehicle based on the heading angle of the leading vehicle, wherein when an expected track between a current location of the vehicle and the location of the leading vehicle is a straight line, a difference between the target heading angle of the vehicle and the heading angle of the leading vehicle is less than or equal to a heading angle threshold; or when the expected track between the current location of the vehicle and the location of the leading vehicle is a curve, the target heading angle of the vehicle is located between the heading angle of the leading vehicle and a heading angle of the expected track between the current location of the vehicle and the location of the leading vehicle.

5.   The method according to any one of claims 1 to 4, wherein the method further comprises:

   obtaining a curvature of a road on which the intelligent vehicle queue is located; and
   determining a target speed of the vehicle based on the curvature of the road, wherein the target speed of the vehicle is inversely proportional to the curvature.

6.   The method according to any one of claims 1 to 5, wherein the method further comprises:

   obtaining a second longitudinal distance between the current location of the vehicle and the location of the leading vehicle, wherein the second longitudinal distance indicates an interval arc length between the current location of the vehicle and the location of the leading vehicle in a direction of the expected track; and
   determining the target speed of the vehicle based on the second longitudinal distance, wherein when the second longitudinal distance is greater than or equal to a fourth distance threshold, the target speed of the vehicle is greater than a current speed of the vehicle and/or the target speed is in a proportional relationship with the second longitudinal distance; or when the second longitudinal distance is less than the fourth distance threshold, a difference between the target speed and the speed of the leading vehicle is less than or equal to a speed threshold.

7.   The method according to any one of claims 1 to 6, wherein the determining a target traveling location of the vehicle based on the first information and the location of the leading vehicle comprises:

   determining a location of a virtual leading vehicle of the vehicle based on the first information and the location of the leading vehicle; and
   determining the target traveling location of the vehicle based on the location of the virtual leading vehicle and a track planning algorithm.

8.   The method according to any one of claims 1 to 7, wherein the expected track is a center line of the road on which the intelligent vehicle queue is located.

9.   A vehicle control apparatus, comprising a functional module configured to implement the method according to any one of claims 1 to 8.

10.  A vehicle control apparatus, comprising a memory and a processor, wherein

   the memory is configured to store program instructions; and
   the processor is configured to execute the program instructions in the memory, to implement the method according to any one of claims 1 to 8.

11.  A vehicle, wherein the vehicle comprises the control apparatus according to claim 9 and the control apparatus according to claim 10.

12.  A computer-readable storage medium, wherein the computer-readable storage medium stores program code to be executed by a computer, and the program code comprises instructions used to implement the method according to any one of claims 1 to 8.

**13.** A computer program product, wherein the computer program product comprises instructions used to implement the control method according to any one of claims 1 to 8.

FIG. 1

FIG. 2

Obtain first information and a location of a leading vehicle of a vehicle, where the first information includes a speed of the leading vehicle and/or an expected track of an intelligent vehicle queue  S301

Determine a target traveling location of the vehicle based on the first information and the location of the leading vehicle  S302

Control a traveling track of the vehicle based on the target traveling location of the vehicle  S303

FIG. 3

FIG. 4

Obtain a heading angle of a leading vehicle  S501

Determine a target heading angle of a vehicle based on the heading angle of the leading vehicle  S502

Control a traveling direction of the vehicle based on the target heading angle  S503

FIG. 5

FIG. 6

FIG. 7

Obtain a curvature of a road on which a vehicle is located ⟩∼ S801

Determine a target speed of the vehicle based on the curvature of the road, where the target speed of the vehicle is inversely proportional to the curvature ⟩∼ S802

Control a traveling speed of the vehicle based on the target speed of the vehicle ⟩∼ S803

FIG. 8

Vehicle control apparatus 900

Obtaining module 901

Determining module 902

Control module 903

FIG. 9

Vehicle control
apparatus 1000

Processor
1001

Interface
circuit 1002

Memory 1003

FIG. 10

## INTERNATIONAL SEARCH REPORT

| International application No. |
| --- |
| **PCT/CN2023/126298** |

| A. | CLASSIFICATION OF SUBJECT MATTER |
| --- | --- |

B60W30/165(2020.01)i; B60W30/16(2020.01)i; B60W30/14(2006.01)i; G05D1/43(2024.01)i

According to International Patent Classification (IPC) or to both national classification and IPC

| B. | FIELDS SEARCHED |
| --- | --- |

Minimum documentation searched (classification system followed by classification symbols)

IPC:G05D,B60W,B60R,G08G

Documentation searched other than minimum documentation to the extent that such documents are included in the fields searched

Electronic data base consulted during the international search (name of data base and, where practicable, search terms used)

CNABS, CNTXT, CJFD, DWPI, ENTXT, ENTXTC, VEN: 领航车, 头车, 前车, 引导车, 目标车, 安全距离, 车间距, 车距, 跟随距离, 纵向距离, 横向距离, 可变时距间距, 车速, 速度, 相对速度, 正相关, 垂直, 道路, 非固定, 轨迹, 航向, 目标轨迹, 目标位置, 偏差, 偏离, 期望, 期望轨迹, 曲率, lead harvester, leader, follower, head vehicle, pace, distance, relative position, attitude, trajectory, variable time gap, velocity, speed, expected

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115562310 A (NANTONG XIAOWEI INTELLIGENT TECHNOLOGY CO., LTD.) 03 January 2023 (2023-01-03) <br> description, paragraphs 4-127, and figures 1-5 | 1, 3-13 |
| A | CN 110816529 A (NORTHWESTERN POLYTECHNICAL UNIVERSITY) 21 February 2020 (2020-02-21) <br> entire document | 1-13 |
| A | CN 114740863 A (LUNQU TECHNOLOGY (DONGGUAN) CO., LTD.) 12 July 2022 (2022-07-12) <br> entire document | 1-13 |
| A | US 2017147005 A1 (AGJUNCTION LLC) 25 May 2017 (2017-05-25) <br> entire document | 1-13 |
| A | US 6032097 A (HONDA MOTOR CO., LTD.) 29 February 2000 (2000-02-29) <br> entire document | 1-13 |

☐ Further documents are listed in the continuation of Box C.       ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 January 2024** | **26 January 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/126298**

| Patent document cited in search report | | | Publication date (day/month/year) | Patent family member(s) | | | Publication date (day/month/year) |
|---|---|---|---|---|---|---|---|
| CN | 115562310 | A | 03 January 2023 | None | | | |
| CN | 110816529 | A | 21 February 2020 | GB | 202017117 | D0 | 09 December 2020 |
| | | | | GB | 2594762 | A | 10 November 2021 |
| | | | | GB | 2594762 | B | 08 June 2022 |
| CN | 114740863 | A | 12 July 2022 | None | | | |
| US | 2017147005 | A1 | 25 May 2017 | US | 10890922 | B2 | 12 January 2021 |
| US | 6032097 | A | 29 February 2000 | JPH | 10162282 | A | 19 June 1998 |
| | | | | JP | 3732292 | B2 | 05 January 2006 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310224107